## Europäisches Patentamt
## European Patent Office
## Office européen des brevets

(19)

(11) Numéro de publication: **0 239 457**
**B1**

(12) **FASCICULE DE BREVET EUROPEEN**

(45) Date de publication du fascicule du brevet:
**16.08.90**

(51) Int. Cl.⁵: **F16D 13/70**, F16F 15/12

(21) Numéro de dépôt: **87400507.7**

(22) Date de dépôt: **09.03.87**

(54) Volant amortisseur pour transmission, notamment pour véhicule automobile.

(30) Priorité: **14.03.86 FR 8603664**

(43) Date de publication de la demande:
**30.09.87 Bulletin 87/40**

(45) Mention de la délivrance du brevet:
**16.08.90 Bulletin 90/33**

(84) Etats contractants désignés:
**DE FR GB**

(56) Documents cités:
**FR-A- 2 303 985**
**FR-A- 2 560 654**

(73) Titulaire: **VALEO, 64 Avenue de la Grande Armée,
F-75017 Paris(FR)**

(72) Inventeur: **Despres, Dominique, 24 Rue du Général
Roguet, F-92110 Clichy(FR)**

(74) Mandataire: **CABINET BONNET-THIRION, 95 Boulevard
Beaumarchais, F-75003 Paris(FR)**

## Description

La présente invention concerne d'une manière générale les volants pour transmission, du type de ceux constituant usuellement une pièce d'inertie dans les embrayages, notamment dans les embrayages destinés à l'équipement des véhicules automobiles.

Elle vise plus particulièrement ceux de ces volants, ou volants amortisseurs, au sein desquels sont incorporés des moyens d'amortissement à l'égard d'éventuels couples de torsion.

Ainsi qu'on le sait, en effet, pour filtrer les vibrations susceptibles de prendre naissance tout au long de la chaîne cinématique que constitue une transmission, chaîne cinématique qui, sur un véhicule automobile, va du moteur aux arbres de roue, il est usual d'insérer, dans une telle transmission, un dispositif amortisseur de torsion.

Le plus souvent, ce dispositif amortisseur de torsion est incorporé au disque de friction de l'embrayage.

Mais, en variante, ou en complément, il a déjà été également proposé d'incorporer un tel dispositif amortisseur de torsion au volant pour certaines applications particulières, notamment pour les véhicules dont le moteur développe un couple relativement notable aux faibles régimes de rotation, pour lequel une minimisation des bruits de "trash", c'est-à-dire des bruits apparaissant sous couple, doit être plus particulièrement recherchée.

C'est le cas, par exemple, pour le volant amortisseur faisant l'objet de la demande de brevet français qui, déposée le 1er Mars 1985 sous le No 85 03049, a été publiée sous le No 2.560.654.

Globalement, un tel volant amortisseur comporte deux parties coaxiales montées rotatives l'une par rapport à l'autre, avec, susceptibles d'intervenir entre elles, des moyens élastiques à action circonférentielle et/ou des moyens de frottement.

Bien entendu, entre ces parties coaxiales sont en outre radialement interposés des moyens de roulement.

Il s'agit, en pratique, l'emplacement axialement disponible étant mesuré, d'un roulement unique.

Ce roulement est à l'origine de difficultés.

En effet, il intervient entre deux pièces d'inertie, donc lourdes, puisqu'il s'agit de pièces constitutives d'un volant, et, s'il existe un jeu, et plus précisément un jeu axial et/ou radial, entre ses organes de roulement et ses bagues, lesdites bagues sont l'objet de sollicitations de martèlement de la part desdits organes de roulement lorsque lesdites pièces sont elles-mêmes l'objet de mouvements axiaux et/ou radiaux, mêmes limités, l'une par rapport à l'autre, tel qu'il s'en produit inévitablement sous les effets par exemple d'éventuelles vibrations.

Il en résulte donc un risque non négligeable de marquage de ces bagues, au préjudice de l'intégrité de l'ensemble et de sa longévité.

Ce risque est d'autant plus accentué que, en pratique, les déplacements angulaires l'une par rapport à l'autre dont sont par ailleurs susceptibles les deux parties coaxiales concernées sont le plus souvent relativement limités, et que, par conséquent, toute amorce de marquage ne peut qu'aller en s'approfondissant, les mêmes organes intervenant aux mêmes endroits.

Pour minimiser un tel risque, il importe de pouvoir minimiser, sinon annuler, tout jeu entre les organes de roulement du roulement et ses bagues.

Le plus souvent, à ce jour, le roulement est un roulement simple, c'est-à-dire un roulement ne comportant axialement qu'une seule rangée d'organes de roulement.

Il est connu, avec un tel roulement simple, d'annuler le jeu entre les organes de roulement et les bagues en conformant en conséquence les pistes de celles-ci, suivant des configurations diamétralement opposées l'une par rapport à l'autre par rapport aux organes de roulement, et en soumettant axialement l'une desdites bagues, tout en contrebutant l'autre, à un effort élastique la sollicitant en direction desdits organes de roulement.

Dans la demande de brevet FR-A 2 560 654 mentionnée ci-dessus, il a été proposé d'appliquer cette disposition à un roulement à double rangée et bague divisée, c'est-à-dire à un roulement, connu en soi, qui comporte, échelonnées axialement, deux rangées d'organes de roulement, et dont l'une quelconque des bagues, interne ou externe, est fractionnée axialement en deux demi-bagues, une par rangée d'organes de roulement, un tel roulement présentant notamment l'avantage d'avoir, pour un encombrement axial minimal, deux rangées d'organes de roulement, et donc, les conditions étant égales par ailleurs, de réduire d'autant les risques de marquage des bagues, tout en se satisfaisant d'une relative facilité de fabrication.

Plus précisément, dans cette demande de brevet FR-A 2 560 654, il est proposé, s'agissant de sa bague divisée, d'assurer un emmanchement coulissant de ce roulement sur son siège, c'est-à-dire un emmanchement, qui, tout en étant relativement serré, est suffisamment lâche pour que, sous la sollicitation de moyens élastiques à action axiale prévus à cet effet à la manière des dispositions usuelles en la matière pour un roulement simple, l'une au moins des deux ·demi-bagues de cette bague divisée puisse axialement se déplacer par rapport à l'autre.

Outre celui de mettre en oeuvre une pièce particulière, en pratique une rondelle Belleville, pour le déploiement de l'effort élastique axial recherché, cette disposition a notamment pour inconvénient de nécessiter un ajustement précis, relativement difficile à obtenir, entre, d'une part, cet effort élastique axial, et, d'autre part, le volant amortisseur concerné étant en service au sein d'un embrayage, la charge axiale de débrayage se développant par ailleurs au sein d'un tel embrayage lors de sa commande en dégagement.

En outre, impliquant un certain jeu, nécessaire au coulissement recherché, entre la bague divisée du roulement et le siège correspondant de celui-ci, elle ne peut que conduire à des lacunes d'étanchéité pour la graisse à mettre par ailleurs en oeuvre dans un tel roulement pour son bon fonctionnement.

Enfin, et surtout, elle ne peut qu'être contrariée par les contraintes radiales qui se développent par ailleurs immanquablement dans l'une ou l'autre des deux parties coaxiales concernées, en raison notamment des vis axiales traversant celles-ci, soit pour la solidarisation l'une à l'autre de deux pièces constitutives d'une telle partie coaxiale, soit pour la fixation de l'ensemble à l'arbre moteur concerné, le vissage d'une telle vis impliquant inévitablement une déformation de la partie coaxiale qu'elle traverse, qui se développe en lobe autour de l'axe du perçage correspondant de celle-ci, et qui, prenant naissance au voisinage du siège du roulement, ne peut que perturber la capacité de coulissement recherché pour la bague divisée de celui-ci.

La présente invention a d'une manière générale pour objet une disposition, qui, à l'inverse de la précédente, tire au contraire parti d'une telle éventuelle déformation en lobe(s), et qui, tout en conduisant à d'autres avantages, permet elle aussi d'éviter la présence d'un jeu entre les organes de roulement du roulement et ses bagues.

De manière plus précise, elle a tout d'abord pour objet un procédé pour le montage d'un volant amortisseur pour transmission, notamment pour véhicule automobile, comportant deux parties coaxiales, qui sont montées rotatives l'une par rapport à l'autre, avec, susceptibles d'intervenir entre elles, des moyens élastiques à action circonférentielle et/ou des moyens de frottement, et entre lesquelles est radialement interposé au moins un roulement à double rangée et bague divisée, c'est-à-dire un roulement qui comporte, échelonnées axialement, deux rangées d'organes de roulement, et dont l'une quelconque au moins des bagues interne et externe est fractionnée axialement en deux demi-bagues, une par rangée d'organes de roulement, ce procédé étant du genre suivant lequel ledit roulement est emanché à force sur ou dans un siège appartenant à l'une des parties coaxiales concernées et étant d'une manière générale caractérisé en ce que on emmanche à force, par sa bague divisée, ledit roulement, sur ou dans son siège correspondant, en agissant pour ce faire sur la tranche extérieure de la demi-bague correspondante de ladite bague divisée, et en ce que, au moins localement, on développe ensuite une contrainte radiale dans la partie coaxiale concernée, en tirant profit, pour ce faire, des vis axiales auxquelles est par ailleurs soumise la partie coaxiale concernée, le vissage d'une telle vis impliquant inévitablement une déformation en lobe de ladite partie coaxiale autour de l'axe du perçage correspondant de celle-ci ; elle a encore pour objet un volant amortisseur pour transmission mettant en œuvre un tel procédé.

Par emmanchement à force on entend ici, de manière usuelle, par opposition à un emmanchement coulissant, un emmanchement suffisamment serré pour s'opposer normalement à tout coulissement.

Suivant l'invention, un tel emmanchement à force est appliqué à la bague divisée du roulement mis en œuvre.

Il est à souligner, à ce sujet, qu'une telle opération va à l'encontre des idées reçues dans ce domaine, car elle implique que l'effort d'emmanchement correspondant transite par les organes de roulement concernés, alors que, pour ménager ces derniers, il ne devrait normalement être appliqué qu'à celle des bagues du roulement qui est d'un seul tenant.

Mais, avantageusement appliqué, suivant l'invention, à la bague divisée d'un tel roulement, l'expérience montrant, en pratique, qu'il est possible de s'en satisfaire, il conduit avantageusement à une mise en place à jeu nul de ce roulement.

En développant ensuite radialement, au moins localement, une contrainte dans la partie coaxiale concernée, l'interdiction de coulissement dûe à une telle mise en place à jeu nul pour la bague divisée du roulement se trouve avantageusement confirmée et renforcée, ce qui assure la pérennité, en service, de l'absence de tout jeu entre les organes de roulement du roulement ainsi traité et les bagues de celui-ci.

En pratique, pour le développement d'une telle contrainte radiale, il est avantageusement tiré profit, suivant l'invention, des vis axiales auxquelles est par ailleurs soumise la partie coaxiale concernée, le vissage d'une telle vis impliquant inévitablement, comme rappelé ci-dessus, une déformation en lobe de cette partie coaxiale.

En effet, une telle partie coaxiale comporte toujours, axialement, au voisinage du siège du roulement, au moins un perçage propre au passage d'une telle vis, et, en pratique, répartis circulairement, une pluralité de tels perçages.

En pratique, il en est ainsi pour l'une et l'autre des deux parties coaxiales concernées, en sorte que, au moins lorsque le volant amortisseur est en place sur l'arbre moteur correspondant, il est développé, vis-à-vis du siège du roulement qu'il comporte, d'une part une contrainte radiale en direction de l'axe de l'ensemble, et d'autre part une contrainte radiale en direction opposée audit axe.

De préférence, le roulement mis en oeuvre dans le volant amortisseur suivant l'invention est dépourvu de toute cage interne d'espacement pour ses organes de roulement.

Outre qu'une telle disposition permet d'optimiser le nombre d'organes de roulement par rangée, ces organes de roulement pouvant alors être quasi jointifs les uns par rapport aux autres dans une telle rangée, et ainsi de minimiser les risques de marquage, au montage et/ou en fonctionnement, des bagues par les organes de roulement, elle permet avantageusement de s'affranchir des inconvénients usuels des cages d'espacement, c'est-à-dire ceux inhérents à la formation de poussière au fur et à mesure de leur usure.

Quoi qu'il en soit, l'emmanchement serrè, suivant l'invention, de la bague divisée du roulement mis en oeuvre donne enfin avantageusement l'assurance d'une bonne étanchéité pour la graisse présente par ailleurs dans ce roulement, et donc pour un bon maintien en place de cette graisse.

Les caractéristiques et avantages de l'invention ressortiront d'ailleurs de la description qui va suivre, à titre d'exemple, en référence aux dessins schématiques annexés sur lesquels :

la figure 1 est, pour partie, une vue partielle en élévation, et, pour partie, une vue partielle en coupe, suivant la ligne brisée I-I de la figure 2, d'un volant amortisseur suivant l'invention ;

la figure 2 est une vue en coupe axiale de ce volant amortisseur, suivant la ligne brisée II-II de la figure 1 ;

la figure 3 reprend, à échelle supérieure, le détail de la figure 2 repéré par un encart III sur celle-ci ;

la figure 4 est une vue qui, analogue à celle de la figure 3, illustre le mode de montage, suivant l'invention, du roulement que comporte le volant amortisseur concerné.

Tel qu'illustré sur ces figures, le volant amortisseur suivant l'invention comporte, globalement, deux parties coaxiales A, B montées rotatives l'une par rapport à l'autre.

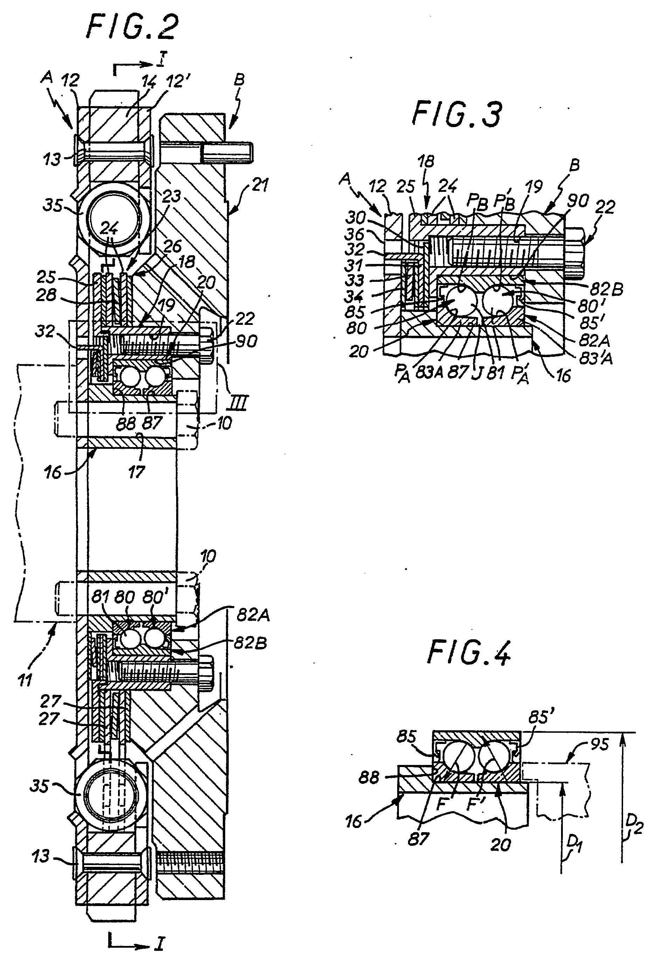

Par des vis 10, schématisées en traits interrompus à la figure 2, la partie A, ou partie d'entrée, est destinée à être solidarisée à arbre 11, en pratique un arbre menant, par exemple l'arbre de sortie, ou vilebrequin, du moteur, dans le cas de l'equipement d'un véhicule automobile.

Cette partie A comporte, annulairement, autour de l'axe de l'ensemble, et à distance l'un de l'autre, deux flasques 12, 12'.

Par leur périphérie externe, ou de plus grand diamètre, ces flasques 12, 12' ont sensiblement même développement radial, et ils sont solidarisés l'un à l'autre, par exemple par des rivets 13, tel que représenté, avec insertion, entre eux, d'une entretoise annulaire 14.

Par leur périphérie interne, ou de plus petit diamètre, les flasques 12, 12' ont par contre des extensions radiales différentes : alors que le flasque 12 s'étend sensiblement jusqu'au voisinage immédiat de l'axe de l'ensemble, le flasque 12' s'arrête largement à distance de celui-ci.

A la périphérie interne du flasque 12 est accolée à celui-ci, du même côté que le flasque 12', une rondelle annulaire 16, qui forme moyeu, et qui, traversée, comme ledit flasque 12, par les vis 10, se trouve solidarisée à ce flasque 12 par ces dernières.

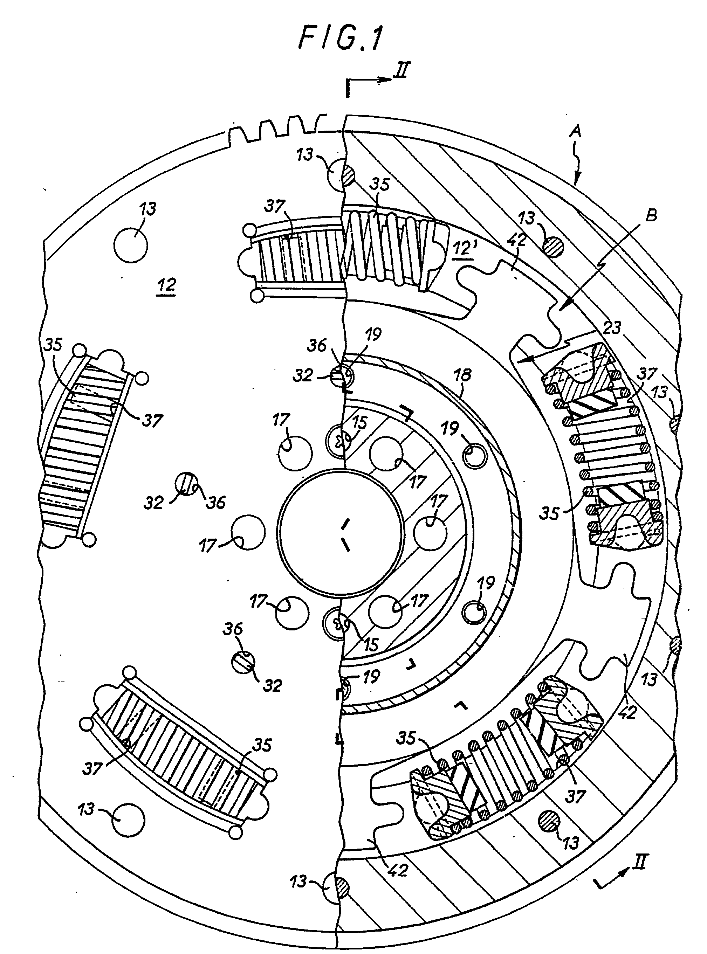

Tel que visible à la figure 1, il peut cependant être prévu, pour une solidarisation spécifique de cette rondelle 16 au flasque 12 indépendamment de la fixation de l'ensemble sur l'arbre 11 concerne, des perçages taraudés 15.

Quoi qu'il en soit, pour le passage des vis 10, la rondelle 16 comporte, répartis circulairement, une pluralité de perçages 17 propres chacun à l'intervention d'une telle vis 10, et, plus précisément, au passage de celle-ci.

La partie B, ou partie de sortie, comporte, globalement, quant à elle, d'une part, un moyeu 18, qui entoure la rondelle 16 de la partie A, avec interposition, entre lui et cette dernière, d'un roulement 20 et, d'autre part, un flasque 21, qui, par des vis 22, est rapporté sur ledit moyeu 18 et est ainsi solidarisé en rotation à celui-ci, ledit moyeu 18 comportant, à cet effet, répartis circulairement, une pluralité de perçages taraudés 19, propres chacun à l'intervention d'une telle vis 22, et, plus précisément, au vissage de celle-ci.

Par ce flasque 21, qui, pour l'essentiel, s'étend à l'extérieur du volume défini par les flasques 12, 12' de la partie A, le volant amortisseur suivant l'invention est adapté à pouvoir servir de plateau de réaction pour un disque de friction, non représenté, et à être ainsi solidarisé en rotation, par frottement, à ce disque de friction, alors même que le moyeu de celui-ci est solidaire en rotation d'un deuxième arbre, en pratique un arbre mené, par exemple l'arbre d'entrée d'une boîte de vitesses dans le cas, plus particulièrement, concerné, de l'équipement d'un véhicule automobile.

La partie B comporte en outre, annulairement, entre les flasques 12, 12' de la partie A, un voile 23 formé lui aussi d'au moins un flasque 24.

En pratique, dans la forme de réalisation représentée, ce voile 23, qui s'étend autour du moyeu 18, entre le flasque 21 et une bride 25 que présente radialement en saillie ledit moyeu 18 à son extrémité opposée audit flasque 21, est formé de deux flasques annulaires 24 disposés axialement à distance l'un de l'autre, et son intervention au sein de la partie B concernée se fait par l'intermédiaire d'un limiteur de couple 26.

Dans la forme de réalisation représentée, ce limiteur de couple 26 met en oeuvre deux rondelles de frottement 27, qui, chacune respectivement, encadrent le voile 23, en étant disposées, l'une entre ce voile 23 et le flasque 21, l'autre entre ce voile 23 et la bride radiale 25 du moyeu 18, et une rondelle élastique à action axiale 28, par exemple une simple rondelle Belleville, tel que représenté, qui, disposée axialement entre les deux flasques 24 constitutifs de ce voile 23, sollicite conjointement en serrage axial l'une et l'autre desdites rondelles de frottement 27, entre ladite bride 25 et l'un desdits flasques 24, pour l'une, et entre l'autre desdits flasques 24 et ledit flasque 21, pour l'autre.

Abstraction faite du limiteur de couple 26 ainsi consitué, le voile 23 de la partie B est libre en rotation autour du moyeu 18 de celle-ci.

Entre les parties A, B du volant amortisseur suivant l'invention sont susceptibles d'intervenir, dans la forme de réalisation représentée, d'une part, pour les faibles valeurs du débattement angulaire relatif entre lesdites parties A, B, des moyens de frottement, et, d'autre part, en plus, pour des valeurs plus élevées de ce débattement angulaire, des moyens élastiques à action circonférentielle.

D'une manière générale, les moyens de frottement mis en oeuvre comportent au moins une rondelle de frottement, qui intervient axialement entre les parties A, B, et qui, disposée au contact de l'une de celles-ci, est soumise à des moyens élastiques à action axiale prenant appui sur l'autre.

Dans la forme de réalisation représentée, ces moyens de frottement comportent une rondelle de frottement 30, qui, disposée au contact du moyeu 18 de la partie B, du côté de celui-ci tourné vers le flasque 12 de la partie A, est portée par une rondelle de support 31 calée par des pattes axiales 32 sur ledit flasque 12, celles-ci étant engagées sans jeu circonférentiel dans des ajours 36 prévus à cet effet dans ce dernier, et qui est sollicitée en application axiale contre ledit moyeu 18 par une rondelle élastique à action axiale 33, en pratique une rondelle Belleville, intervenant entre ladite rondelle de support 31 et une rondelle de répartition 34 accolée audit flasque 12.

En pratique, la force de serrage développée par la rondelle élastique 33 est largement inférieure à celle développée par la rondelle élastique 28 précédente.

Quant aux moyens élastiques à action circonférentielle destinés à intervenir entre les parties A, B ils comportent des organes élastiques à action circonférentielle 35, qui sont au nombre de cinq dans la forme de réalisation représentée, et qui sont disposés chacun individuellement dans des logements 37 ménagés pour eux dans les flasques 12, 12' de la partie A.

Avec ces organes élastiques à action circonférentielle 35 sont aptes à interférer des bras 42 appartenant au voile 23 de la partie B, ces bras 42 s'étendant chacun individuellement radialement entre deux successifs de tels organes élastiques à action circonférentielle 35.

Comme ces derniers, ces bras 42 sont donc au nombre de cinq dans la forme de réalisation représentée.

Ces dispositions sont bien connues par elles-mêmes, et, ne faisant pas en soi l'objet de la présente invention, elles ne seront pas décrites plus en détail ici.

De manière également connue en soi, le roulement 20 interposé radialement entre les parties A, B est un roulement à double rangée et bague divisée.

Autrement dit, il s'agit d'un roulement qui comporte, échelonnées axialement, deux rangées 80, 80' d'organes de roulement 81, et dont l'une quelconque au moins des bagues interne 82A et externe 82B est fractionnée axialement en deux demi-bagues, une par rangée 80, 80' d'organes de roulement 81.

Dans la forme de réalisation représentée, c'est la bague interne, ou de plus petit diamètre, 82A, de ce roulement 20 qui en consitue la bague divisée, cette bague interne 82A étant donc formée de deux demi-bagues 83A, 83'A, qui, distinctes l'une de l'autre, sont en pratique axialement à distance l'une de l'autre, avec, entre elles, un jeu axial J.

Bien entendu, ces deux demi-bagues 83A, 83'A ont un même diamètre interne D1.

Les pistes PA, P'A, qu'elles comportent chacune respectivement pour les rangées 80, 80' d'organes de roulement 81, sont globalement obliques sur le plan transversal de l'ensemble qui leur est commun, en étant arrondies au profil desdits organes de roulement 81, ceux-ci étant en pratique des billes, et leurs concavités sont tournées l'une vers l'autre.

Conjointement, la bague externe, ou de plus grand diamètre, 82B, du roulement 20 est, elle, d'un seul tenant, en intéressant l'une et l'autre des rangées 80, 80' d'organes de roulement 81.

Soit D2 son diamètre externe.

Comme les pistes PA, P'A précédentes, les pistes PB, P'B, qu'elle comporte pour les rangées 80, 80' d'organes de roulement 81, sont globalement obliques sur le plan transversal de l'ensemble passant par sa zone médiane, mais ces pistes PB, P'B y sont disposées dos à dos, avec leurs concavités tournées en sens opposés l'une par rapport à l'autre.

Ainsi, pour une même rangée 80, 80' d'organes de roulement 81, les pistes PA-PB, P'A-P'B sont globalement disposées en positions diamétralement opposées l'une par rapport à l'autre par rapport aux organes de roulement 81 correspondants.

De préférence, le roulement 20 est dépourvu de toute cage interne d'espacement pour ces organes de roulement 81, ce qui, comme mentionné précédemment, permet, notamment, les conditions étant égales par ailleurs, de mettre en oeuvre un plus grand nombre de tels organes de roulement 81, et donc de minimiser, au montage et/ou en fonctionnement, les risques de marquage des bagues 82A, 82B par ceux-ci.

De préférence, également, le roulement 20 est par contre muni de joints d'étanchéité, respectivement 85, 85', à ses extrémités axiales, pour confinement de la graisse dont, de manière usuelle, son volume intérieur est normalement bourré.

Pour réception du roulement 20 ainsi constitué, chacune des parties A, B comporte un siège.

Pour la partie A, il s'agit d'un siège destiné à former une cage interne pour le roulement 20, celui-ci devant être engagé sur un tel siège, et ce siège est formé par une portée cylindrique 87 ménagée à cet effet à la périphérie externe de la rondelle 16 formant le moyeu de cette partie A.

La diamètre de cette portée cylindrique 87 est sensiblement égal au diamètre interne D1 de la bague interne 82A du roulement 20, tout en étant légèrement supérieur à celui-ci.

En pratique, pour le calage axial du roulement 20, cette portée cylindrique 87 se trouve limitée, de côté du flasque 12 de la partie A, par un épaulement transversal 88.

Pour la partie B, le siège du roulement 20 est destiné à former une cage externe pour celui-ci, ce roulement 20 devant être engagé dans un tel siège, et il s'agit d'un moyeu 18 de cette partie B.

Le diamètre de cet alésage 90 est sensiblement égal au diamètre externe D2 de la bague externe 82B du roulement 20, tout en étant légèrement inférieur à celui-ci.

En pratique, la longueur axiale de l'alésage 90, qui, du côté du flasque 12 de la partie A, se trouve lui aussi limité par un épaulement transversal 92, est elle-même légèrement supérieure à la longueur axiale correspondante du roulement 20.

Ainsi qu'on le notera, les perçages 17 que présente la partie A, et plus précisément la rondelle 16 qui en forme le moyeu, pour les vis 10, sont disposés au voisinage du siège que constitue pour le roulement 20, et plus précisément pour la bague interne 82A de celui-ci, la portée cylindrique 87 de cette rondelle 16, et, radialement, ils s'étendent à l'intérieur du voume délimité par ce siège.

Conjointement, les perçages 19 que comporte la partie B, et plus précisément son moyeu 18, pour les vis 22, sont disposés au voisinage du siège que constitue pour le roulement 20, et, plus précisément, pour la bague externe 82B de celui-ci, l'alésage interne 90 de ce moyeu 18, et, radialement, ils s'étendent à l'extérieur du volume délimité par ce siège.

Dans l'un et l'autre cas, l'épaisseur de matière entre les perçages en cause et le siège correspondant est en pratique relativement faible.

Pour le maintien axial du roulement 20 du côté du flasque 12′ de la partie A, le flasque 21 de la partie B se prolonge en pratique radialement au-delà de l'alésage interne 90 du moyeu 18 en direction de l'axe de l'ensemble.

Le montage du volant amortisseur suivant l'invention peut se faire de la manière suivante.

Il est d'abord procédé à la mise en place du roulement 20 sur la rondelle 16 formant le moyeu de la partie A, figure 4.

Suivant l'invention, on emmanche à force, par sa bague interne divisée 82A, ce roulement 20 sur son siège correspondant, c'est-à-dire sur la portée cylindrique 87 de cette rondelle 16, en agissant pour ce faire, tel que schématisé en traits interrompus, en 95, à la figure 4, sur la tranche extérieure de la demi-bague 83′A correspondante de ladite bague interne divisée 82A, soit que l'outil correspondant soit un outil de poussée, si la rondelle 16 se trouve par ailleurs contrebutée, soit qu'il s'agisse d'une butée, si l'action de poussée nécessaire est au contraire exercée sur ladite rondelle 16.

Lors d'un tel emmanchement à force, la poussée exercée transite de la demi-bague 83′A de la bague interne 82A à la bague externe 82B, en passant par les organes de roulement 81 de la rangée 80′ correspondante de ces organes de roulement 81, suivant la flèche F′ de la figure 4, puis elle transite de cette bague externe 82B à la demi-bague 83A de la bague interne 82A, en passant par les organes de roulement 81 de la rangée 80 correspondante de ces organes de roulement 81, suivant la flèche F de la figure 4.

L'emmanchement est terminé lorsque la demi-bague 83A de la bague interne divisée 82A arrive en butée contre l'épaulement transversal 88 de la rondelle 16.

En pratique, et suivant les tolérances de montage, un effort d'emmanchement d'ordre de 100 kg à une tonne est suffisant.

Mais il va de soi que ces valeurs numériques ne sont données ici qu'à titre d'exemple, et qu'elles ne doivent être en rien considérées comme limitatives de l'invention.

Quoi qu'il en soit, il résulte du processus d'emmanchement à force suivant l'invention que la mise en place du roulement 20 se fait à jeu nul.

Il est procédé, ensuite, à l'emmanchement, sur le roulement 20, du moyeu 18 de la partie B, par l'alésage 90 de ce moyeu formant son siège correspondant, puis à l'empilage axial des autres constituants concernés.

Une fois cette mise en place effectuée, on développe ensuite, au moins localement, dans la partie coaxiale A, qui est celle concernée par la bague interne divisée 82A du roulement 20, une contrainte radiale.

En pratique, le développement de cette contrainte radiale n'intervient que lors de la mise en place de l'ensemble sur l'arbre moteur 11.

En effet, suivant l'invention, pour le développement de cette contrainte radiale, on tire profit des vis axiales 10 auxquelles est alors soumise la partie coaxiale A, le vissage d'une telle vis 10 impliquant inévitablement une déformation en lobe de cette partie coaxiale A, et plus précisément de sa rondelle 16, autour de l'axe du perçage 15 correspondant de celle-ci.

L'expérience montre en effet qu'une telle rondelle 16 est alors l'objet d'un certain gonflement radial autour de chacun de ces perçages 15.

Ce gonflement est de l'ordre par exemple de 5 microns, mais, comme précédemment, cette valeur numérique ne doit pas être considérée comme limitative de la présente invention.

Quoi qu'il en soit, elle suffit à confirmer l'emmanchement à force de la bague interne divisée 82A sur le siège que constitue pour elle la portée cylindrique 87 de cette rondelle 16, en s'opposant à tout coulissement, le long de cette portée cylindrique 87, de l'une et/ou de l'autre des deux demi-bagues 83A, 83′A qui la constituent.

La pérennité de l'absence de jeu pour le roulement 20, entre les organes de roulement 81 de celui-ci et ses bagues interne 82A et externe 82B, se trouve ainsi assurée.

Il en est d'autant plus ainsi que, en pratique, la partie B se trouve elle-même l'objet d'une contrainte radiale autour de l'axe de ses perçages 19, du fait du vissage des vis 22 nécessaires à la solidarisation de son flasque 21 sur son moyeu 18, et que le gonflement radial qui en résulte ne peut pas manquer lui non plus d'avoir une incidence sur le maintien axial d'ensemble du roulement 20, et donc des deux demi-bagues 83A, 83′A constitutives de sa bague interne divisée 82A.

Ainsi, du fait des vis 10, d'une part, et 22, d'autre part, il est développé, d'une part, une contrainte radiale en direction opposée à l'axe de l'ensemble, et, d'autre part, un contrainte radiale en direction dudit axe, et le roulement 20 est sous l'influence de l'une et l'autre de ces contraintes radiales.

En pratique, la résistance d'emmanchement du roulement 20 sur le siège que constitue pour lui la portée cylindrique 87 de la rondelle 16 de la partie A et dans le siège que constitue également pour lui l'alésage interne 90 du moyeu 18 de la partie B, c'est-à-dire l'effort qu'il serait nécessaire de lui appliquer pour le dégager de tels sièges, est, de ce fait, supérieure, vis 10 et 22 en place, à la force de serrage élastique développée par ailleurs par les moyens élastiques à action axiale que constitue la rondelle élastique 33 associée à la rondelle de frottement 30.

Cette rondelle élastique 33 n'est donc pas en mesure d'avoir une quelconque incidence sur le maintien en place du roulement 20.

Le fonctionnement, en service, du volant amortisseur suivant l'invention n'étant pas en cause, et ce fonctionnement étant bien connu par lui-même, il ne sera pas décrit ici.

Il suffira d'indiquer que, au cours de ce fonctionnement, le roulement 20 reste à jeu nul, et que, s'exerçant en sens opposé, l'effort axial de débrayage n'est pas non plus en mesure d'avoir une quelconque incidence sur le maintien en place du roulement 20.

Bien entendu, la présente invention ne se limite pas à la forme de réalisation décrite et représentée, mais elle englobe toute variante d'exécution.

En particulier, la bague divisée du roulement à double rangée et bague divisée mise en oeuvre, au lieu d'en constituer la bague interne, pourrait tout aussi bien en constituer la bague externe.

**Revendications**

1. Procédé pour le montage d'un volant amortisseur, pour transmission, notamment pour véhicule automobile, comportant deux parties coaxiales (A, B), qui sont montées rotatives l'une par rapport à l'autre, avec, susceptibles d'intervenir entre elles, des moyens élastiques à action circonférentielle (35) et/ou des moyens de frottement (30), et entre lesquelles est radialement interposé au moins un roulement (20) à double rangée et bague divisée, c'est-à-dire un roulement (20) qui comporte, échelonnées axialement, deux rangées (80, 80') d'organes de roulement (81) et dont l'une quelconque au moins des bagues interne (82A) et externe (82B) est fractionnée axialement en deux demi-bagues (83A, 83'A), une par rangée (80, 80') d'organes de roulement (81), procédé suivant lequel ledit roulement (20) est emmanché sur ou dans un siège (87, 90) appartenant à l'une des parties coaxiales (A, B) concernées, caractérisé en ce qu'on emmanche à force, par sa bague divisée (82A), ledit roulement (20) sur ou dans son siège (87, 90) correspondant, en agissant pour ce faire sur la tranche extérieure de la demi-bague (83'A) correspondante de ladite bague divisée (82A), et en ce que, au moins localement, on développe ensuite une contrainte radiale dans la partie coaxiale (A) concernée, en tirant profit, pour ce faire, de vis axiales (10, 22) auxquelles est par ailleurs soumise la partie coaxiale concernée (A, B), le vissage d'une telle vis (10, 22) impliquant inévitablement une déformation en lobe de ladite partie coaxiale (A, B) autour de l'axe du perçage (17, 19) correspondant de celle-ci.

2. Volant amortisseur pour transmission, notamment pour véhicule automobile, du genre comportant deux parties coaxiales (A, B), qui sont montées rotatives l'une par rapport à l'autre, avec, susceptibles d'intervenir entre elles, des moyens élastiques à action circonférentielle (35) et/ou des moyens de frottement (31), et entre lesquelles est radialement interposé au moins un roulement (20) à double rangée et bague divisée, c'est-à-dire un roulement (20) qui comporte, échelonnées axialement, deux rangées (80, 80') d'organes de roulement (81), et dont l'une quelconque des bagues interne (82A) et externe (82B) est fractionnée axialement en deux demi-bagues (83A, 83'A), une par rangée (80, 80') d'organes de roulement (81), ledit roulement (20) étant emmanché à force sur ou dans un siège (87, 90) appartenant à l'une des parties coaxiales (A, B) concernées, caractérisé en ce que, en combinaison, et en application du procédé suivant la revendication 1, c'est par sa bague divisée (82A) que ledit roulement (20) est emmanché à force sur ou dans son siège (87, 90) correspondant, et, au voisinage dudit siège (87, 90), la partie coaxiale (A, B) concernée par ce siège (87, 90) comporte axialement au moins un perçage (17, 19) propre au passage d'une vis (10, 22).

3. Volant amortisseur suivant la revendication 2, caractérisé en ce que la partie coaxiale (A) concernée comporte, répartis circulairement au voisinage du siège du roulement (20), plusieurs perçages (17) propres chacun à l'intervention d'une vis (10).

4. Volant amortisseur suivant l'une quelconque des revendications 2 ou 3, caractérisé en ce que l'autre partie coaxiale (B) comporte aussi, au voisinage du siège (90) correspondant du roulement (20), au moins un perçage (19) propre à l'intervention d'une vis (22).

5. Volant amortisseur suivant la revendication 4, caractérisé en ce que ladite autre partie coaxiale (B) comporte, répartis circulairement au voisinage du siège (90) du roulement (20), plusieurs perçages (19) propres chacun à l'intervention d'une vis (22).

6. Volant amortisseur suivant l'une quelconque des revendications 2 à 5, caractérisé en ce que, des moyens de frottement (30) étant prévus, et lesdits moyens de frottement (30) comportant au moins une rondelle de frottement (30) qui intervient axialement entre les parties coaxiales (A, B) concernées, et qui, disposée au contact de l'une de celles-ci, est soumise à des moyens élastiques à action axiale (34) prenant appui sur l'autre, la résistance d'emmanchement du roulement (20) sur et/ou dans son siège (87, 90), c'est-à-dire l'effort qu'il serait nécessaire de lui appliquer pour le dégager dudit siège, est supérieure, vis (10, 22) en place, à la force de serrage élastique développée par lesdits moyens élastiques à section axiale (34).

7. Volant amortisseur suivant l'une quelconque des revendications 2 à 6, caractérisé en ce que le roulement (20) est dépourvu de toute cage interne d'espacement pour ses organes de roulement (81).

8. Volant amortisseur suivant l'une quelconque des revendications 2 à 7, caractérisé en ce que la bague divisé (82A) du roulement (20) en est la bague interne.

9. Volant amortisseur suivant l'une quelconque des revendications 2 à 8, caractérisé en ce que la bague divisée (82B) du roulement (20) en est la bague externe.

**Claims**

1. A method of assembling a flywheel damper for a transmission, in particular for an automotive vehicle, comprising two coaxial parts (A, B), which are mounted for rotation of one with respect to the other with, adapted to act between them, circumferentially acting resilient means (35) and/or friction means (30), and between which there is radially interposed at least one bearing (20) having a double race and a split ring, that is to say a bearing (20) which includes, staggered in the axial direction, two races (80, 80') of rolling members (81), and in which at least one ring of the inner (82A) and outer (82B) rings is divided axially into two half rings (83A, 83'A), one for each race (80, 80') of rolling members (81), in accordance with which method the said bearing (20) is fitted on or in a seating (87, 90) comprised in one of the said coaxial parts (A, B), characterised in that the said bearing (20) is force fitted, by means of its divided ring (82A) on or in its corresponding seating (87, 90), acting to this end on the outer surface of the corresponding half ring (83'A) of the said divided ring (82A), and in that, at least locally, a radial compressive force is subsequently developed in the relevant coaxial part (A), advantage being taken for this purpose of axial screws (10, 22) with which the relevant coaxial part (A, B) is also provided, the operation of screwing in a said screw (10, 22) involving a permanent, lobe-like deformation of the said coaxial part (A, B) about the axis of the corresponding perforation (17, 19) of the latter.

2. A flywheel damper for a transmission, in particular for an automotive vehicle, comprising two coaxial parts (A, B), which are mounted for rotation of one with respect to the other with, adapted to act between them, circumferentially acting resilient means (35) and/or friction means (30), and between which there is radially interposed at least one bearing (20) having a double race and a split ring, that is to say a bearing (20) which includes, staggered in the axial direction, two races (80, 80') of rolling members (81), and in which at least one ring of the inner (82A) and outer (82B) rings is divided axially into two half rings (83A, 83'A), one for each race (80, 80') of rolling members (81), the said bearing (20) being force fitted on or in a seating (87, 90) comprised in one of the said coaxial parts (A, B), characterised in that, in combination, and by application of the method according to Claim 1, it is by means of its divided ring (82A) that the said bearing (20) is force fitted on or in its corresponding seating (87, 90), and, in the vicinity of the said seating (87, 90) the coaxial part (A, B) relevant to the said seating (87, 90) includes at least one axial perforation (17, 19) adapted to receive a screw (10, 22).

3. A flywheel damper according to Claim 2, characterised in that the relevant coaxial part (A) includes, spaced apart on a circle in the vicinity of the seating of the bearing (20), several perforations (17) each of which is adapted to receive a screw (10).

4. A flywheel damper according to either one of Claims 2 or 3, characterised in that the other coaxial part (B) also includes, in the vicinity of the corresponding seating (90) of the bearing (20), at least one perforation (19) adapted to receive a screw (22).

5. A flywheel damper according to Claim 4, characterised in that the said other coaxial part (B) includes, spaced apart on a circle in the vicinity of the seating (90) of the bearing (20), several perforations (19) each of which is adapted to receive a screw (22).

6. A flywheel damper according to any one of Claims 2 to 5, characterised in that friction means (30) being provided, and the said friction means (30) comprising at least one friction ring (30) which acts axially between the said coaxial parts (A, B) and which, being disposed in contact with one of the latter, is subjected to axially acting resilient means (34) which engage on the other of the said coaxial parts, the reaction force in the fitting of the bearing (20) on and/or in its seating (87, 90), that is to say the force that it would be necessary to apply to it in order to disengage it from the said seating, is greater when the screws (10, 22) are in place than the elastic gripping force developed by the said axially acting resilient means (34).

7. A flywheel damper according to any one of Claims 2 to 6, characterised in that the bearing (22) is without any internal spacing cage for its rolling members (81).

8. A flywheel damper according to any one of Claims 2 to 7, characterised in that the divided ring (82A) of the bearing (30) is its inner ring.

9. A flywheel damper according to any one of Claims 2 to 8, characterised in that the divided ring (82B) of the bearing (20) is its outer ring.

## Patentansprüche

1. Verfahren für die Montage eines Dämpfungsschwungrades für Getriebe, insbesondere für Kraftfahrzeuge, enthaltend zwei koaxiale Teile (A, B), die im Verhältnis zueinander drehbar angebracht sind, wobei mit der Möglichkeit der Einschaltung zwischen diesen am Umfang wirksame elastische Mittel (35) und/oder Reibmittel (30) vorgesehen sind, und zwischen denen radial wenigstens ein Lager (20) in doppelreihiger Ausführung und mit geteiltem Ring eingesetzt ist, d.h. ein Lager (20), welches axial abgestuft zwei Reihen (80, 80') von Wälzorganen (81) enthält, und wobei wenigstens einer der Innenringe (82A) und der Außenringe (82B) axial in zwei Ringhälften (83A, 83'A), nämlich eine je Reihe (80, 80') von Wälzorganen (81), unterteilt ist, wobei nach diesem Verfahren das genannte Lager (20) auf oder in einen Sitz (87, 90) getrieben wird, der zu einem der betreffenden koaxialen Teile (A, B) gehört, dadurch gekennzeichnet, daß das genannte Lager (20) über den geteilten Ring (82A) auf oder in den entsprechenden Sitz (87, 90) getrieben wird, indem man auf den äußeren Rand der entsprechenden Ringhälfte (83'A) des genannten geteilten Rings (82A) einwirkt, und daß danach zumindest örtlich eine radiale Spannung in dem betreffenden koaxialen Teil (A) erzeugt wird, indem man zu diesem Zweck axiale Schrauben (10, 22) benutzt, denen der betreffende koaxiale Teil (A, B) im übrigen ausgesetzt ist, während das Anziehen einer solchen Schraube (10, 22) in jedem Falle eine lappenförmige Verformung des genannten koaxialen Teils (A, B) um die Achse der entsprechenden Bohrung (17, 19) bewirkt.

2. Dämpfungsschwungrad für Getriebe, insbesondere für Kraftfahrzeuge, von der Art, die zwei koaxiale Teile (A, B) enthält, die im Verhältnis zueinander drehbar angebracht sind, wobei mit der Möglichkeit der Einschaltung zwischen diesen am Umfang wirksame elastische Mittel (35) und/oder Reibmittel (31) vorgesehen sind, und zwischen denen radial wenigstens ein Lager (20) in doppelreihiger Ausführung und mit geteiltem Ring eingesetzt ist, d.h. ein Lager (20), welches axial abgestuft zwei Reihen (80, 80') von Wälzorganen (81) enthält, und wobei wenigstens einer der Innenringe (82A) und der Außenringe (82B) axial in zwei Ringhälften (83A, 83'A), nämlich eine je Reihe (80, 80') von Wälzorganen (81), unterteilt ist, wobei das genannte Lager (20) auf oder in einen Sitz (87, 90) getrieben wird, der zu einem der betreffenden koaxialen Teile (A, B) gehört, dadurch gekennzeichnet, daß das genannte Lager (20) in Kombination und unter Anwendung des Verfahrens nach Anspruch 1 mittels des geteilten Ringes (82A) auf oder in den entsprechenden Aufnahmesitz (87, 90) getrieben wird und der von dieser Aufnahme (87, 90) betroffene koaxiale Teil (A, B) in Nähe der genannten Aufnahme (87, 90) axial wenigstens eine Bohrung (17, 19) enthält, durch die eine Schraube (10, 22) gesteckt werden kann.

3. Dämpfungsschwungrad nach Anspruch 2, dadurch gekennzeichnet, daß der betreffende koaxiale Teil (A), rundherum in Nähe der Aufnahme des Lagers (20) verteilt, mehrere Bohrungen (17) aufweist, die sich jeweils für die Einführung einer Schraube (10) eignen.

4. Dämpfungsschwungrad nach einem der Ansprüche 2 oder 3, dadurch gekennzeichnet, daß der andere koaxiale Teil (B) in Nähe der entsprechenden Aufnahme (90) des Lagers (20) ebenfalls wenigstens eine Bohrung (19) aufweist, die sich zur Einführung einer Schraube (22) eignet.

5. Dämpfungsschwungrad nach Anspruch 4, dadurch gekennzeichnet, daß der genannte andere koaxiale Teil (B), rundherum in Nähe der Aufnahme (90) des Lagers (20) verteilt, mehrere Bohrungen (19) aufweist, die jeweils zur Einführung einer Schraube (22) geeignet sind.

6. Dämpfungsschwungrad nach einem der Ansprüche 2 bis 5, dadurch gekennzeichnet, daß Reibmittel (30) vorgesehen sind und die genannten Reibmittel (30) wenigstens eine Reibscheibe (30) enthalten, die axial zwischen den betroffenen koaxialen Teilen (A, B) zum Einsatz kommt und die, weil sie mit einem dieser Teile in Berührung ist, der Einwirkung axial angreifender elastischer Mittel (34) ausgesetzt ist, welche auf dem anderen Teil aufliegen, wobei der für das Auftreiben/Eintreiben des Lagers (20) auf/in den Aufnahmesitz (87, 90) erforderliche Widerstand, d.h. die Kraft, die erforderlich wäre, um es aus der genannten Aufnahme herauszuholen, bei an ihrem Platz befindlicher Schraube (10, 22) größer ist als die elastische Klemmkraft, die von den genannten, axial angreifenden elastischen Mitteln (34) erzeugt wird.

7. Dämpfungsschwungrad nach einem der Ansprüche 2 bis 6, dadurch gekennzeichnet, daß das Lager (20) keinerlei Innen-Abstandskäfig für die Wälzorgane (81) besitzt.

8. Dämpfungsschwungrad nach einem der Ansprüche 2 bis 7, dadurch gekennzeichnet, daß es sich bei dem geteilten Ring (82A) des Lagers (20) um den Innenring handelt.

9. Dämpfungsschwungrad nach einem der Ansprüche 2 bis 8, dadurch gekennzeichnet, daß der geteilte Ring (82B) des Lagers (20) der Außenring ist.

# FIG.1

FIG.2

FIG.3

FIG.4